# EUROPÄISCHE PATENTANMELDUNG

(11) **EP 1 327 903 A1**
(43) Veröffentlichungstag der Anmeldung: **16.07.2003**
(21) Anmeldenummer: 02360029.9
(22) Anmeldetag: 14.01.2002
(51) Int. Cl.: G02F 1/01

(54) **Optischer Wellenleiterphasenschieber**

(71) Anmelder: ALCATEL, 75008 Paris (FR)
(72) Erfinder: Klekamp, Axel Dr., 71706 Markgröningen (DE); Bülow, Henning Dr., 70806 Kornwestheim (DE)
(74) Vertreter: Rausch, Gabriele, Dr.

(57) **Zusammenfassung**

Die vorliegende Erfindung stellt einen optischen Wellenleiteirphasenschieber (100) zur Verfügung, der einen planaren siliziumdioxidhaltigen optischen Glaswellenleiter umfasst (105), dessen Kern (101) Glas enthält, sowie einen planaren optischen Polymerwellenleiter (104), dessen Kern (102) ein Polymer und/oder eine Mischung aus Polymeren enthält, weiterhin Mittel (103), die die Änderung der Temperatur des planaren optischen Polymerwellenleiters bewirken und wobei der Brechungsindex des planaren optischen Polymerwellenleiters größer ist als der Brechungsindex des planaren siliziumdioxidhaltigen optischen Wellenleiters. Damit lassen sich schon durch eine geringe Erhöhung der Temperatur des planaren optischen Polymerwellenleiters die Brechungsindizes des planaren optischen Polymerwellenleiters und des siliziumdioxidhaltigen optischen Glaswellenleiters angleichen. Außerdem wird nur die Ausberitungskonstante des optischen Feldes in einem erfindungsgemäßen siliziumdioxidhaltigen optischen Wellenleiter durch den Kopplungsmodus zwischen Siliziumdioxid- und Polymerwellenleiter beeinflusst. Durch entsprechende Dimensionierung des Polymerwellenleiters wird das Licht trozt der Kopplung nicht im Polymerwellenleiter geführt. Dadurch wird erreicht, dass zur Modifizierung der Phase eine geringere Energie verglichen mit herkömmlichen Lösungen erforderlich ist und das der Phasenschieber verlustlos arbeitet. Weiter betrifft die vorliegende Erfindung den Einsatz erfindungsgemäßer Wellenleiterphasenschieber und des erfindungsgemäßen Verfahrens in optischen Datenübertragungseinrichtungen.

## Beschreibung

### Gebiet der Erfindung

Die vorliegende Erfindung betrifft einen optischen Wellenleiterphasenschieber umfassend einen planaren siliziumdioxidhaltigen optischen Glaswellenleiter, dessen Kern Glas enthält, einen planaren optischen Polymerwellenleiter, dessen Kern ein Polymer und/oder eine Mischung aus Polymeren enthält sowie Mittel, die die Änderung der Temperatur des planaren optischen Polymerwellenleiters bewirken. Darüberhinaus betrifft die Erfindung ein Verfahren zur Phasenänderung in optischen Wellenleitern.

### Stand der Technik

Wellenleiterphasenschieber bzw. -schalter sind im Stand der Technik schon beschrieben. So ist beispielsweise aus der EP 0997765 A2 bekannt, optische Wellenleiterschalter einzusetzen, die aus mehreren, in einer ersten Schicht parallel angeordneten Anzahl an Glaswellenleitern bestehen, wobei in einer darüber liegenden Schicht wenigstens ein Polymerwellenleiter angeordnet ist, der mit den Glaswellenleitern einen spitzen Winkel einschließt. Dort, wo der Polymerwellenleiter die darunter liegenden Glaswellenleiter kreuzt, entstehen vertikale Koppelbereiche. Mit Hilfe von Heizelektroden sind die Koppeleigenschaften gezielt beeinflussbar. Damit kann Licht von einem Glaswellenleiter in einen anderen, parallel dazu angeordneten Glaswellenleiter umgeschaltet werden, wobei die Temperatur der vertikalen Koppelbereiche so eingestellt wird, dass Licht von dem einen Glaswellenleiter in den Polymerwellenleiter hinauf koppelt, dort weitergeführt wird und in einem anderen Koppelbereich in den gewünschten Glaswellenleiter hinunter koppelt.

Weiterhin sind aus der Veröffentlichung von N. Keil et al. "Hybrid Polymer/Silica Vertical Coupler Switches" in ECIO 2001, Optische Wellenleiter für faseroptische Kommunikationsnetze bekannt, die beispielsweise beim Umschalten oder beim optischen Routing eingesetzt werden. Dabei kommt es ebenfalls zu einer vertikalen Kopplung von Siliziumdioxid- und Polymerwellenleitern, die übereinander angeordnet sind und wobei die Temperatur des Polymerwellenleiters über Heizelemente gesteuert werden kann. In dem vorerwähnten Artikel kann durch geeignete Auswahl und Anordnung von Trägerschicht, der siliziumdioxidhaltigen Wellenleiterschicht sowie der Polymerwellenleiterschicht eine vertikale Kopplung des im Glaswellenleiter geführten Lichtes erreicht werden. Die siliziumdioxidhaltige Wellenleiterschicht und die Polymerwellenleiterschicht sind dabei allerdings durch ein so genanntes "Gap Layer" aus einem Polymer voneinander getrennt. Auch hierbei wird das Licht bei bzw. nach der Kopplung in dem Polymerwellenleiter geführt.

Die Forderung nach immer größeren Datenraten für die Übertragung in optischen Kommunikationsnetzen bedingt eine zunehmende Notwendigkeit der Korrektur der Laufzeitfehler auf der Übertragungsstrecke (der optischen Faser). Damit wird die Korrektur auch höherer Ordnungen der chromatischen Dispersion (CD) oder auch der Polarisations-Moden-Dispersion (PMD) notwendig. Für die Entwicklung von optischen PMD- oder CD-Kompensatoren sind schnelle optische Phasenschieber notwendig.

Die vorstehend diskutierten, für den vorgenannten Zweck ebenfalls einsetzbaren Konzepte des Standes der Technik genügen insbesondere nicht den Anforderungen an die Schnelligkeit, aufzuwendende Energie und an eine beliebige Modifikation der optischen Phase.

### Beschreibung der Erfindung

Daher bestand die Aufgabe der vorliegenden Erfindung darin, einen optischen Wellenleiterphasenschieber zur Verfügung zu stellen, der es ermöglicht, die Phase von optischen Signalen beliebig zu modifizieren, wobei nur eine geringe Energie erforderlich ist und wobei der optische Wellenleiterphasenschieber außerdem einfach auf eine höhere Anzahl von Übertragungskanälen erweitert werden kann.

Diese Aufgabe der vorliegenden Erfindung wird dadurch gelöst, dass der erfindungsgemäße optische Wellenleiterphasenschieber einen planaren siliziumdioxidhaltigen optischen Glaswellenleiter umfasst, dessen Kern Glas enthält, sowie einen planaren optischen Polymerwellenleiter, dessen Kern ein Polymer und/oder eine Mischung aus Polymeren enthält, weiterhin Mittel, die die Änderung der Temperatur des planaren optischen Polymerwellenleiters bewirken und wobei der Brechungsindex des planaren optischen Polymerwellenleiters größer ist als der Brechungsindex des planaren siliziumdioxidhaltigen optischen Wellenleiters.

Da die Lichtführung im hier vorgestellten Wellenleiterphasenschieber nur im Glas erfolgt, kann der verwendete Polymerwellenleiter sehr dünn ausgeführt werden. Damit wird erreicht, dass sich schon durch eine geringe Erhöhung der Temperatur des planaren optischen Polymerwellenleiters die Brechungsindizes des planaren optischen Polymerwellenleiters (im folgenden der Einfachheit halber "Polymerwellenleiter" genannt) und des siliziumdioxidhaltigen optischen Glaswellenleiters (im folgenden der Einfachheit halber "Glaswellenwellenleiter" genannt) angleichen und nur die Ausbreitungskonstante des optischen Feldes in siliziumdioxidhaltigen optischen Wellenleitern durch den Kopplungsmodus zwischen Glas- und Polymerwellenleiter beeinflusst wird.

Der erfindungsgemäße Wellenleiterphasenschieber beruht somit auf einem vertikalen Glas-Polymer Hybrid Wellenleiterschalter, wobei der Polymerwellenleiter allerdings so ausgelegt wird, dass die optische Welle in ihm nicht ausbreitungsfähig ist.

Licht wird daher nicht vertikal in den Polymerwellenleiter eingekoppelt, sodass nur die Phase des optischen Feldes im Glaswellenleiter beeinflusst wird. Das Licht wird im Gegensatz zu den vorerwähnten Lösungen des Standes der Technik trotz der Kopplung nicht im Polymerwellenleiter geführt. Dies führt dazu, dass die aufzuwendende Energie zur Temperaturerhöhung sehr gering ist (typischerweise ist die notwendige elektrische Heizleistung < 20mW) und auch schnell wirksam wird.

Alle diese vorteilhaften Effekte bewirken überraschenderweise, dass die Modifizierung der Phase mit einer sehr kurzen Reaktionszeit von ca. 0.1-3, bevorzugt 0.1-2 Millisekunden möglich ist.

Diese kurze Reaktionszeit ist eine Grundvoraussetzung für die angestrebte Anwendung in Komponenten zur CD- oder PMD-Kompensation.

Bevorzugt ist, dass das Polymer und/oder die Mischung aus Polymeren des planaren optischen Polymerwellenleiters einen ausgeprägten thermooptischen Effekt aufweisen. Dadurch kann durch die gezielte Temperaturänderung der Brechungsindex des Polymerwellenleiters einfach an den Brechungsindex des Glaswellenleiters angeglichen werden, wobei durch den ausgeprägten thermooptischen Effekt nur eine geringe Energie zum Heizen der Mittel, die die Änderung der Temperatur des Polymerwellenleiters bewirken, erforderlich ist.

In einer bevorzugten Ausführungsform ist der Kern des planaren Glaswellenleiters von einer Wellenleitermantelschicht umgeben, die eine Änderung des Brechungsindizes des Glaswellenleiters bewirkt. Damit kann der Brechungsindex des Kerns des Glaswellenleiters in einfacher Weise gezielt eingestellt und variiert werden kann.

Bevorzugt sind zwei Wellenleitermantelschichten vorgesehen, wovon die eine ein Polymer und/oder eine Mischung aus Polymeren und die andere Siliziumdioxid umfasst, sodass durch eine gezielte Auswahl der Dicke und der Abfolge der entsprechenden Wellenleitermantelschichten der Brechungsindex besonders einfach und gut eingestellt werden kann.

Weiter bevorzugt ist, dass der Kern des Polymerwellenleiters in Streifenform ausgebildet ist. Damit ist aufgrund seiner geringen und gezielt einstellbaren Dicke der Temperaturgradient in seinem Innern besonders klein, so dass die durch die Heizelemente hervorgerufenen Temperaturänderungen ohne große Temperatur- und Zeitverluste auf den Polymerwellenleiter übertragen werden können.

In einer vorteilhaften Ausführungsform beträgt die Dicke des Kerns des Glaswellenleiters 4-10 µm, bevorzugt 5-8 µm. Weiter ist bevorzugt, dass die Dicke des Kerns des planaren Polymerwellenleiters 0.5-5 µm, bevorzugt 1-3 µm beträgt.

Die Dicke des Glas- und Polymerwellenleiters und die Dicke der Zwischenschichten wird entsprechend den Anforderungen an den maximalen Wert der Phasenschiebung und der Wellenlänge des Lichts angepasst. Auch dadurch wird die Einstellung des Brechungsindex und damit auch die Angleichung der Brechungsindizes des Polymerwellenleiters und des Glaswellenleiters beeinflusst.

Bevorzugt sind die Mittel, die die Änderung der Temperatur des planaren optischen Polymerwellenleiters bewirken, als dem Fachmann an sich wohlbekannte Heizelemente ausgebildet, die einfach angebracht und auch einfach beheizt werden können.

Die Aufgabe der vorliegenden Erfindung wird weiter durch ein Verfahren zur Phasenänderung in optischen Wellenleitern gelöst, wobei dieses Verfahren unter Verwendung eines erfindungsgemäßen Wellenleiterphasenschiebers durchgeführt wird, wobei die Temperatur des planaren optischen Polymerwellenleiters so geändert wird, dass sein Brechungsindex vermindert wird, sodass Licht vom Glaswellenleiter nur in den Polymerwellenleiter koppelt.

Durch das erfindungsgemäße Verfahren wird in einfacher Weise erreicht, dass die Ausbreitungskonstanten des Glas- und Polymerwellenleiters angeglichen werden und damit nur die Phase des weiterhin im Glaswellenleiter geführten Lichts verändert wird. Damit arbeitet der Phasenschieber verlustlos, insbesondere sind die Materialverluste des Polymerwellenleiters für diese Anwendung unbedeutend.

Bevorzugt erfolgt die Verwendung eines erfindungsgemäßen optischen Wellenleiterphasenschiebers bzw. des erfindungsgemäßen Verfahrens in optischen Datenübertragungseinrichtungen und in deren einzelnen Komponenten, beispielsweise in Mach-Zehnder-Interferometern, Polarisationsmoden- Dispersion-Equalizern, Gain-Equalizern oder Bragg Gratings.

Definitionen aller vorstehend erwähnten Vorrichtungen und Bauteile finden sich in "Glossary of Telecommunication Terms" FED-STD-1037C der U.S. amerikanischen Behörde "General Services Administration" worauf hier vollumfänglich Bezug genommen wird.

Weitere vorteilhafte Ausgestaltungen der vorliegenden Erfindung sind in der nachstehenden Zeichnung und anhand eines Ausführungsbeispiels erläutert.

Es versteht sich von selbst, dass die vorstehend erwähnten und nachstehend erläuterten Vorteile und Merkmale der Erfindung nicht nur in der spezifisch beschriebenen Kombination, sondern auch in anderen, dem Fachmann sich ohne weiteres Nachdenken erschließenden Kombinationen oder in Alleinstellung verwendet werden können, ohne den Bereich der Erfindung zu verlassen.

### Figuren

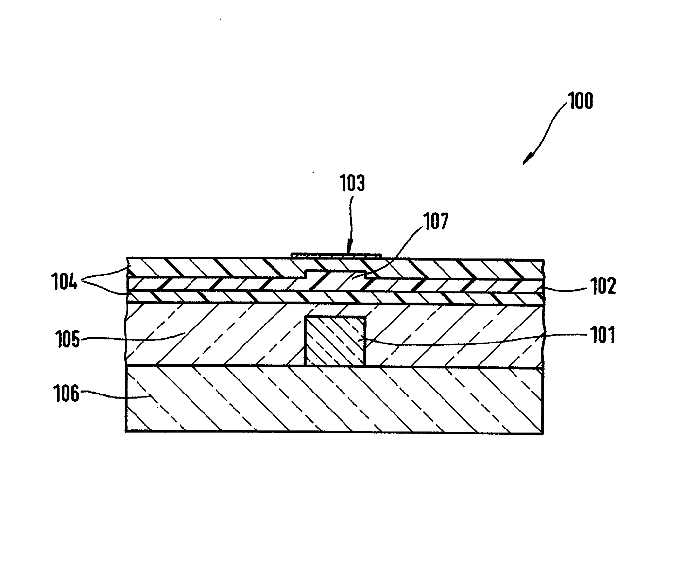

Figur 1 zeigt einen schematischen Querschnitt durch eine erfindungsgemäßen optischen Wellenleiterphasenschieber.

### Ausführungsbeispiel

Die Erfindung ist schematisch in Figur 1 erklärt, wobei bei der Erläuterung des Ausführungsbeispiels Bezug auf die Zeichnung genommen wird.

Figur 1 zeigt einen schematischen Querschnitt durch eine erfindungsgemäßen Wellenleiterphasenschieber 100. Der optische Wellenleiterphasenschieber 100 besteht aus einer unteren Mantelschicht 106 (auch "unterer Puffer", engl.: "buffer layer" genannt) vorzugsweise aus siliziumdioxidhaltigem Material von 10-30 µm Dicke, beispielsweise aus Glas, und ist vorzugsweise plattenförmig.

Außerdem weist der Wellenleiterphasenschieber 100 einen Wellenleiterkern 101 aus entsprechend dotiertem siliziumdioxidhaltigen Material auf, der durch Strukturierung einer Glasschicht hergestellt wird. Der Wellenleiterkern 101 weist einen höheren Brechungsindex auf als das Material der unteren Mantelschicht 106. Der Wellenleiterkern 101 hat eine Dicke von ca. 6 µm.

Weiter umfasst der Wellenleiterphasenschieber 100 eine obere Mantelschicht 105 (auch obere Deckschicht genannt, engl.: "cladding layer") mit dem gleichen Brechungsindex wie die untere Mantelschicht 106. Der gesamte Glaswellenleiter ist dabei z. B. auf einem Siliziumsubstrat aufgebaut.
Unter "Glas" versteht man allgemein Stoffe im amorphen, nichtkristallinen Festzustand. Der Glaszustand läßt sich physikalisch-chemisch als eingefrorene unterkühlte Flüssigkeit bzw. Schmelze auffassen, wobei sich bei hinreichend großer Abkühlgeschwindigkeit einer Schmelze oder bei der Kondensation von Molekülen aus der Dampfphase auf extrem gekühlte Substrate sich praktisch jeder Stoff metastabil in den Glaszustand überführen läßt. Vorliegend wird "Glas" definiert als anorganisches, meist oxidisches Schmelzprodukt, das durch einen Einfriervorgang ohne Auskristallisieren der Schmelzphasenkomponenten in den festen Zustand überführt wird

Über dem Glaswellenleiter ist eine Polymerschicht 104 angeordnet, die einen planaren optischen Polymerwellenleiter 102 mit einem Polymer und/oder einer Polymermischung enthaltenden Kern 107 in Form eines Streifens mit einer Dicke von 1,5 µm aufweist. Der Kern kann dabei eine etwas größere Dicke als die Dicke der übrigen Bereiche des Polymerwellenleiters 102 aufweisen, die etwa 1.0 bis 1.2 µm dick sind.

Über der Polymerschicht 104 sind Heizelemente 103, beispielsweise aus einem Metall wie Chrom oder einer Metallegierung angeordnet.

Das Polymer des planaren Polymerwellenleiters 102 weist einen ausgeprägten thermooptischen Effekt auf. Dies bedeutet, dass sich bereits geringe Temperaturänderungen stark auf die Brechzahl bzw. den Brechungsindex des Polymers auswirken. Typischerweise haben geeignete Polymermaterialien einen Temperaturkoeffizienten dn/dT von - 8x10⁻⁵/K bis etwa - 40x10⁻⁵/K.

Durch die Länge der lässt sich nun die Temperatur des optischen Polymerwellenleiters und damit dessen Brechzahl steuern. Auf diese Weise kann die Phase des im darunterliegenden Glaswellenleiters 101 geführten Lichts beeinflusst werden. Der Grad der Beeinflussung wird gesteuert durch die jeweilige Dicke der Schichten 105, 104 und 102 und durch die Länge des Polymerwellenleiters 107 und der Heizelektrode 103.

Typischerweise betragen diese Dicken einige Mikrometer, wobei sich diese Angabe für die Schicht 105 auf die Dicke über dem Wellenleiterkern 101 bezieht.

Beispielsweise kann die Dicke der unteren Mantelschicht 106 etwa 10-30µm betragen, die der oberen Mantelschicht 105 gemessen über dem Wellenleiterkern 101) etwa 1-6 µm in Abhängigkeit u.a. von der Brechzahldifferenz und dem Polymermaterial. Die Dicke der Polymerschichten 104 liegt dabei auch bei etwa 1-10µm (vorzugsweise 3-4µm für die untere Polymerschicht), um den Abstand der Heizelektrode 103 zum Streifenwellenleiter 107 gering zu halten.

Der Begriff Glas- bzw. Polymerwellenleiter bezieht sich für die nachstehende Erläuterung lediglich auf die entsprechenden Wellenleiterkerne. Ein Glaswellenleiter ist also ein optischer Wellenleiter, dessen Wellenleiterkern aus Glas besteht. Entsprechendes gilt für einen Polymerwellenleiter.

Für das Funktionieren des erfindungsgemäßen optischen Wellenleiterschiebers ist es grundsätzlich gleichgültig, aus welchem Material die optionalen Wellenleitermantelschichten bestehen. Es ist lediglich sicherzustellen, dass auch hier die für die optische Wellenleitung erforderliche Brechzahldifferenz zwischen Wellenleiterkern und Wellenleitermantel eingehalten wird. Je nach Anforderung liegen die Brechzahldifferenzen typischerweise zwischen 0.3% und 2%. Der Kern des optischen Glaswellenleiters besteht beispielsweise aus Siliziumdioxid oder Siliziumoxinitrid, welche zur gezielten Veränderung der Brechzahl ggf. Zusatzstoffe wie Germaniumdioxid, Titandioxid, Boroxide oder Phosphoroxide enthalten können. Die Verwendung einer bestimmten Glasart ist für die Ausführung des Erfindungsgedankens jedoch nicht erforderlich.

Um eine Lichtführung in dem Glaswellenleiter zu gewährleisten, muss die Brechzahl der ggf. vorhandenen Mantelschichten niedriger sein als die Brechzahl der Kerne der Glaswellenleiter. Andere Voraussetzungen werden an die Materialeigenschaften der Mantelschichten grundsätzlich nicht gestellt.

Wie vorstehend erwähnt, kann es sich dabei nur um eine einzige Mantelschicht, oder um zwei verschiedene Mantelschichten, d. h. eine Mantelschicht aus einem Polymer und/oder einer Mischung aus Polymeren und anschließend um eine Mantelschicht aus Glas, wobei die Abfolge der Schichten beliebig ist, oder aus einer beliebigen Abfolge von polymerhaltigen oder siliziumhaltigen Mantelschichten handeln. Auch eine einzige Schicht kann beispielsweise einen Gradienten bezüglich ihrer chemischen Zusammensetzung aufweisen.

Beispielsweise kann der Glaswellenleiter vollständig von einer Glasmantelschicht umgeben sein. Anschließend kann diese Glasmantelschicht von einer Polymermantelschicht vollständig umgeben sein. Darauf aufbauend können weitere Glas- bzw. Polymermantelschichten aus verschiedenen Polymeren und/oder Polymermischungen aufgebaut sein, um so die Brechungszahl entsprechend zu ändern.

Welcher der Varianten im Einzelfall der Vorzug zu geben ist, hängt u. a. von den Herstellungsverfahren ab, die zur Anwendung kommen sollen. Allerdings führt der direkte Kontakt zwischen dem Kern des Polymerwellenleiters und der Glasmantelschicht dazu, dass Wärme, die von den Heizelektroden erzeugt und in den Kern gelangt ist, unerwünscht durch die thermisch vergleichsweise gut leitende Glasmantelschicht abgeleitet wird. Sofern zwischen dem Polymer- und dem Glaswellenleiter eine Polymermantelschicht angeordnet ist, die die beiden Wellenleiter thermisch voneinander isoliert, kann ein so aufgebauter Phasenschieber mit geringeren Heizströmen betrieben werden.

Beispiele für Polymere für den planaren optischen Polymerwellenleiter sind die üblichen Polymere für optische Anwendungen wie beispielsweise Styrole (etwa Pentafluorstyrol) oder Methacrylate ( wie z.B. Trifluormethylmethacrylat und Glycidylmethacrylat) oder auch Silikone, wobei jedoch die Auswahl nicht auf diese Beispiele beschränkt ist, da die Materialverluste des Polymers für die Anwendung als Phasenschieber keine Rolle spielen. Ausschlaggebend für diese Anwendung sind der Brechungsindex und die mögliche Brechungsindexvariation zur Herstellung eines Polymerwellenleiters und der Temperaturkoeffizient dn/dT.

Erfindungsgemäß sind die Mittel, mit denen die Temperatur des Wellenleiterkerns des Polymerwellenleiters veränderbar ist, im Allgemeinen metallische Heizelektroden, die auf der Oberseite des optischen Raumschalters angeordnet sind. Die genaue Geometrie spielt in diesem Zusammenhang nur eine untergeordnete Rolle, es muss lediglich gewährleistet sein, dass in dem Koppelbereich die Temperatur erhöht werden kann. Alternativ zu den Heizelektroden können im Prinzip auch Kühlelemente vorgesehen sein, beispielsweise in der Art von Peltier-Kühlern.

Wesentlich ist allein, dass in dem Koppelbereich die Temperatur der Polymerwellenleiterkerne gezielt veränderbar ist. Es ist dann möglich, durch eine Temperaturveränderung über den thermooptischen Effekt die Koppeleigenschaften des Koppelbereichs zu verändern. Bei dem dargestellten Ausführungsbeispiel sind die geometrischen Abmessungen des Koppelbereichs und die Brechzahlen der Wellenleiter so gewählt, dass bei einer geringfügigen Temperaturerhöhung des Polymerwellenleiters dessen Kern die gleiche Brechzahl hat wie der Kern des Glaswellenleiters.

Die Unterseite der optionalen Mantelschicht des Glaswellenleiters wird in der Regel auf einem nicht dargestellten Träger aufgebracht sein, bei dem es sich beispielsweise um einen Siliziumkristall oder eine Keramik handeln kann. Möglich ist jedoch auch, die Heizelektroden tragende Seite der Mantelschicht mit einem Träger zu verbinden, wobei dies für die Erfindung jedoch nicht wesentlich ist.

Bei einem weiteren Ausführungsbeispiel der Erfindung wird nur eine geringe Brechzahldifferenz Δ n von etwa 10⁻⁴ zwischen Glaswellenleiter und Polymerwellenleiter eingestellt, die erst verschwindet, wenn die Temperatur des Polymerwellenleiterkerns mithilfe eines Heizelements erhöht wird. Je niedriger die Brechzahldifferenz Δ n ist, desto weniger Wärme muss zugeführt werden, um die Brechzahldifferenz verschwinden zu lassen, und desto höher sind die erreichbaren Schaltgeschwindigkeiten.

Weicht im unbeheizten Zustand die tatsächliche Brechzahldifferenz Δ n von ihrem Sollwert ab, so koppelt ein Teil des Lichts dauerhaft in den Polymerwellenleiter hinüber, was sich aus nachrichtentechnischer Sicht als Nebensprechen bemerkbar macht. Daher ist der Einhaltung der optimalen Brechzahldifferenz Δ n besondere Aufmerksamkeit zu widmen.

Jedoch kann die optimale Brechzahldifferenz Δ n ggf. aufgrund des unterschiedlichen thermooptischen Effekts von Glas und Polymer durch die Regelung der Temperatur des Schalters in gewissen Grenzen eingestellt werden.

Bei der Herstellung eines erfindungsgemäßen Schalters kann durchweg auf dem Fachmann bekannte Verfahren zur Herstellung von Glas- und Polymerwellenleitern zurückgegriffen werden. Beispielsweise können die siliziumdioxidhaltigen Wellenleiter durch Standardflammenhydrolyseablagerung (FDH) und Techniken wie Reaktives lonen-Ätzen (RIE) hergestellt werden. Nachdem die Strukturen im siliziumdioxidhaltigen Material hergestellt worden sind, können die obersten Mantelschichten durch RIE hinuntergeätzt werden. Anschließend kann die Polymerschicht etwa durch Spin-Coating aufgebracht werden. Der so aufgebrachte Polymerwellenleiterschalter wird anschließend durch RIE wieder geätzt, um polymere Streifenwellenleiter zu bilden. Anschließend wird eine obere Polymerschicht aufgebracht und es werden Heizelektroden nach bekannten Verfahren aufgebracht.

Es ist jedoch auch im Rahmen der vorliegenden Erfindung, beispielsweise eine beliebige Anzahl der in Figur 1 dargestellten Einzelwellenschieber miteinander zu kombinieren. Dies kann so erfolgen, dass diese Wellenleiterschieber nebeneinander angeordnet werden, um so ein höhere Anzahl Übertragungskanäle zur Verfügung zustellen. Eine andere Variante besteht darin, eine Mehrzahl von parallel angeordneten Glaswellenleitern mit einem einzigen, quer über alle Glaswellenleiter angeordneten Polymerwellenleiter zu koppeln.

## Patentansprüche

1. Optischer Wellenleiterphasenschieber (100) umfassend:
- einen planaren siliziumdioxidhaltigen optischen Glaswellenleiter (105), dessen Kern (101) Glas enthält,
- einen planaren optischen Polymerwellenleiter (102), dessen Kern (107) ein Polymer und/oder eine Mischung aus Polymeren enthält,
- Mittel (103), die die Änderung der Temperatur des planaren optischen Polymerwellenleiters (102) bewirken,
- und wobei der Brechungsindex des planaren optischen Polymerwellenleiters (104) größer ist als der Brechungsindex des planaren siliziumdioxidhaltigen optischen Glaswellenleiters (102).

2. Optischer Wellenleiterphasenschieber (100) nach Anspruch 1, **dadurch gekennzeichnet, dass** das Polymer und/oder die Mischung aus Polymeren des planaren optischen Polymerwellenleiters und/oder dessen Kern (102, 107) einen thermooptischen Effekt aufweisen.

3. Optischer Wellenleiterphasenschieber (100) nach Anspruch 1 und 2, **dadurch gekennzeichnet, dass** der Kern (101) des planaren siliziumdioxidhaltigen optischen Glaswellenleiters eine Wellenleitermantelschicht umfaßt.

4. Optischer Wellenleiterphasenschieber (100) nach Anspruch 3, **dadurch gekennzeichnet, dass** die Wellenleitermantelschicht ein Polymer und/oder eine Mischung aus Polymeren oder Siliziumdioxid umfasst.

5. Optischer Wellenleiterphasenschieber (100) nach einem der vorhergehenden Ansprüche 1 bis 3, **dadurch gekennzeichnet, dass** zwei Wellenleitermantelschichten vorgesehen sind, **dadurch gekennzeichnet, dass** die eine ein Polymer und die andere Siliziumdioxid umfasst.

6. Optischer Wellenleiterphasenschieber (100) nach einem der vorhergehenden Ansprüche, **dadurch gekennzeichnet, dass** der Kern (107) des planaren optischen Polymerwellenleiters (102) streifenförmig ist.

7. Optischer Wellenleiterphasenschieber (100) nach einem der vorhergehenden Ansprüche, **dadurch gekennzeichnet, dass** die Dicke des Kerns (101) des siliziumhaltigen planaren optischen Glaswellenleiters (105) 4-10 µm beträgt.

8. Optischer Wellenleiterphasenschieber (100) nach einem der vorhergehenden Ansprüche, **dadurch gekennzeichnet, dass** die Dicke des Kerns (107) des planaren optischen Polymerwellenleiters (102) 0,5-5 µm beträgt.

9. Optischer Wellenleiterphasenschieber (100) nach einem der vorhergehenden Ansprüche, **dadurch gekennzeichnet, dass** die Mittel (103), die die Änderung der Temperatur des planaren optischen Polymerwellenleiters (102) bewirken, Heizelemente sind.

10. Verfahren zur Phasenänderung in optischen Wellenleitern unter Verwendung eines optischen Wellenleiterphasenschiebers (100) nach einem der vorhergehenden Ansprüche, wobei die Temperatur des optischen planaren Polymerwellenleiters (102) so geändert wird, dass sein Brechungsindex vermindert wird, sodass sich die Ausbreitungskonstanten vom Glaswellenleiter (105) und Polymerwellenleiter (102) koppeln und angleichen.

11. Verfahren nach Anspruch 10, **dadurch gekennzeichnet, dass** nach der Kopplung nur die Phase des optischen Feldes im Glaswellenleiter (105) beeinflusst wird.

12. Verwendung eines optischen Wellenleiterphasenschiebers (100) nach einem der Ansprüche 1 bis 9 und eines Verfahrens nach den Ansprüchen 10 und/oder 11 in optischen Datenübertragungseinrichtungen.
